# EUROPEAN PATENT SPECIFICATION

(11) **EP 4 361 026 B1**
(45) Date of publication and mention of the grant of the patent: **03.06.2026**
(21) Application number: 22204194.9
(22) Date of filing: 27.10.2022
(51) Int. Cl.: B64C 9/18, B64C 9/38, B64C 29/00, B64C 39/12, B64C 23/06

(54) **WING**
FLÜGEL
AILE

(43) Date of publication of application: 01.05.2024
(73) Proprietor: Lilium eAircraft GmbH, 82234 Wessling (DE)
(72) Inventor: Bunk, Yannick, 82234 Wessling (DE)
(74) Representative: Finnegan Europe LLP

(56) References cited:
- WO-A1-2022/050928
- CN-U- 211 033 016
- US-A1- 2017 197 700
- US-A1- 2022 097 823

## Description

The present invention relates to a wing, preferably a canard wing.

There is generally known, for example, from US 2022/266998 A1, an aircraft having a wing which comprises a fixed lift generating portion such as an airfoil extending along an extension direction of the wing. At a rear portion of the fixed lift generating portion, there is pivotably connected a moveable lift modifying portion which can pivot about an axis along the extension direction. The moveable lift modifying portion is, for example, a flap. The flap comprises at least one propulsion device which moves integrally therewith. In the known technology, on a tip side of the flap along the extension direction, there is arranged part of the airfoil.

CN 211 033 016 U and US 2022/097823 A1 show a wing at least not having the characterizing portion of claim 1. US 2017/197700 A1 and WO 2022/050928 A1 disclose a wing having a fixed lift generating portion and a moveable lift modifying portion comprising a propulsion device.

Thus, in the known technology, there is provided a gap in the extension direction. This gap causes vortices which reduce the overall aerodynamic performance of the wing.

Thus, it is an object of the present invention to improve aerodynamic performance of a wing of the above mentioned kind.

In order to achieve the aforementioned object, a wing having the features of claim 1 is provided. Preferred embodiments are laid down in the dependent claims.

According to the invention, there is provided a wing comprising a fixed lift generating portion extending along an extension direction of the wing; a moveable lift modifying portion which is moveably, preferably pivotably, more preferably about a pivot axis along the extension direction of the wing, connected to the fixed lift generating portion, wherein the moveable lift modifying portion comprises at least one propulsion device configured to generate a thrust force along a thrust direction for powering the aerial vehicle, preferably a plurality of propulsion devices arranged along the extension direction, the at least one propulsion device being of the ducted fan type comprising a duct that accommodates a fan therein.

Differing from the above-identified known technology, the present invention is characterized by the outermost propulsion device forming a moveable wing tip end portion located at a tip side along the extension direction of the wing, the moveable wing tip end portion comprising an aerodynamic profile, which is part of a winglet, the moveable wing tip end portion being integrally formed with the duct of the outermost propulsion device, wherein the outermost propulsion device extends to the tip end of the wing thereby forming the moveable wing tip end portion which comprises the aerodynamic profile being part of the winglet, the moveable wing tip end portion extending from the duct of the outermost propulsion unit to the tip side along the extension direction.

According thereto, it is possible to avoid a gap in the extension direction of the wing. Rather, the moveable lift modifying portion, that is, the outermost propulsion device thereof extends to the tip end of the wing thereby forming the moveable wing tip end portion which comprises an aerodynamic profile. The moveable wing tip end portion comprises a moveable wing tip edge portion which is at least part of a wing tip edge. Consequently, the aerodynamic performance can be enhanced. By means of comprising an aerodynamic profile, air flow can be further advantageously affected such that additional lift may be generated. The aerodynamic profile may generally have any shape in a section perpendicular to the extension direction and preferably, has a leading edge portion and/or a rear edge portion. Preferably, the aerodynamic profile is not a plate section. Also, the aerodynamic profile preferably causes a non-uniform pressure distribution at zero angle of attack between upper and lower side. In particular, the upper side may correspond to a suction side and the lower side may correspond to a pressure side. The aerodynamic profile is part of a winglet, that is, is formed therefrom.

It is preferable if a moveable wing tip edge portion of the moveable wing tip end portion is at least partially inclined with respect to the thrust direction.

Thus, compared with a case in which the moveable wing tip edge portion is parallel to the thrust direction, or in other words, perpendicular to the extension direction, the planform area of the moveable wing tip end portion can be reduced, and the lift distribution can be advantageously modified while reducing the induced drag due to edge circulation.

It is further preferable, if the moveable wing tip edge portion is at least partially inclined toward the tip side as it extends rearward, even more preferably starting from a leading edge portion of the moveable wing tip end portion.

According thereto, the loading on the moveable wing tip end portion can be advantageously affected and the lift generation may be enhanced.

It is further preferable if the moveable wing tip edge portion is inclined at an angle equal or more than 10 degrees and smaller than or equal to 30 degrees with respect to the thrust direction in a plan view of the moveable lift modifying portion.

Thus, the planform of the moveable wing tip end portion can be appropriately set. In particular, the planform area can be made suitable for the entire movement range of the moveable lift modifying portion. It is to be noted that the angle may be a mean angle of a line connecting a leading edge portion and a rear edge portion on the tip side in case the moveable wing tip edge portion is not straight but curved.

According to a further aspect, the moveable lift modifying portion may be located at least in sections rearward of the fixed lift generating portion, preferably the moveable lift modifying portion is a flap.

Thus, the moveable lift modifying portion can massively influence the lift generation wherefore the aforementioned effects may take place more reliably.

According to still another aspect, the at least one propulsion device may be at least partially, in particular a thrust axis, provided on a suction side of the fixed lift generating portion in at least one movement state of a moveable range of the moveable lift modifying portion and/or of the moveable wing tip end portion.

According thereto, the at least one propulsion device may suck the air on the suction side of the fixed lift generating portion and/or the moveable wing tip end portion, which may enhance flow stability and prevent flow separation. This in turn can increase aerodynamic performance of the moveable lift modifying portion and the moveable wing tip end portion thereof. The at least one movement state may be, in particular, a state of horizontal orientation of the thrust axis.

According to still another aspect, a moveable wing tip edge of the moveable wing tip end portion may comprise a concave tip edge portion which has a concave shape.

Thereby, the pressure distribution on the moveable wing tip end portion can be advantageously affected. In particular, drag can be reduced throughout the entire movement range of the moveable lift modifying portion.

According to still another aspect, the moveable wing tip end portion may at least partially extend towards a suction side of the moveable wing tip end portion as it extends toward the tip side.

The moveable wing tip end portion functions as a winglet. That is, the resulting pressure distribution can be set such that the induced drag due to edge circulation can be further reduced.

According to still another aspect, the fixed lift generating portion and the moveable lift modifying portion are pivotally connected to each other, and a moveable wing tip edge portion of the moveable wing tip end portion and a fixed tip edge portion of the fixed lift generating portion are continuous with each other in the plan view of the fixed lift generating portion.

Thus, the moveable wing tip edge portion and the fixed tip edge portion can be provided such that they are substantially flush along the extension direction. In other words, the moveable wing tip edge portion and the fixed tip edge portion can be provided such that they are not shifted along the extension direction. Thereby, the aerodynamic performance is further enhanced.

Preferably, the moveable wing tip end portion and the fixed lift generating portion at least partially, preferably at least surface portions on the suction side thereof and/or the moveable wing tip edge portion and the fixed tip edge portion, have a smooth, preferably tangential, transition, when seen along the extension direction, in at least one movement state of a moveable range of the moveable lift modifying portion, preferably over the entire moveable range,

Thereby, junction losses can be reduced. A smooth transition means a transition without steps or sharp edges. If such a transition is provided over the entire movement range, the aerodynamic performance can be enhanced over a plurality of flight states. The movement state may be a state of horizontal orientation of the thrust axis. For example, the fixed wing tip edge portion and the moveable wing tip edge portion may be provided such that they have a tangential transition in the state of horizontal orientation of the thrust axis.

In particular, the moveable wing tip end portion may have a peripheral portion having a predetermined radius from the pivot axis, and the fixed lift generating portion is provided such that the fixed lift generating portion and the peripheral portion have an aligned tangent at a virtual intersection thereof.

Thereby, a tangential transition can be ensured over a wide movement range.

According to still another aspect, the moveable wing tip end portion has a rear edge portion provided at the rear, being connected to the moveable wing tip edge portion, and being at least partially inclined with respect to the extension direction, preferably towards the front as it extends towards the tip side.

Thereby, the loading on the moveable wing tip end portion can be further reduced since the planform area of the moveable wing tip end portion can be further reduced. Thus, the induced drag can be further reduced.

According to still another aspect, the fixed lift generating portion may comprise a fixed tip edge portion which is preferably at least partially inclined with respect to a front-rear-direction in a plan view of the fixed lift generating portion.

Thereby, the loading can also be reduced on the fixed lift generating portion. In other words, the wing can be provided with a winglet split over the fixed lift generating portion and the moveable lift modifying portion.

According to still another aspect, a moveable wing tip edge portion of the moveable wing tip end portion may have a length in the thrust direction greater than a length of a fixed tip edge portion of the fixed lift generating portion along a front-rear-direction thereof.

Thus, a considerable amount of lift can be provided via the moveable lift modifying portion and the aforementioned effects are particularly advantageous.

According to still another aspect, the moveable wing tip end portion, in particular, the aerodynamic profile thereof, may be formed with at least part of the moveable lift modifying portion, in particular with the duct of the propulsion device, in a monolithic way.

Thereby, manufacturing can be improved. Also, the transition between propulsion device and the wing tip end portion can be made smooth such that flow disturbances can be reduced.

Another aspect relates to an aircraft comprising the wing according to at least one of the preceding aspects.

Thereby, an aircraft with improved aerodynamic performance can be provided.

If the wing is configured as canard wing, stability of the aircraft can be enhanced.

For example, the wing can be provided in front of a center of gravity of the aircraft, in a loaded and unloaded state of the aircraft. A wing of the above kind may be provided on each side, preferably symmetrically, of a longitudinal axis of the aircraft.

Preferably, the aircraft is of a vertical-take-off-and-landing type.

Thus, by means of the wing according to the aspects defined above, the VTOL aircraft can exhibit improved flight performance over a plurality of flight states.

For example, two of the wings of the above kind may be configured as a canard wing, respectively, which are located symmetrically with respect to a longitudinal axis of the aircraft and forward of a center of gravity of the aircraft, and the aircraft further comprises two main wings which are located symmetrically with respect to a longitudinal axis of the aircraft and rearward of a center of gravity of the aircraft, and the two main wings comprising a fixed airfoil and at least one propulsion device, preferably a plurality thereof, pivotably provided with respect to the fixed air foil, even more preferably about an axis parallel to an extension direction of the main wing.

Thereby, the canard wings and the main wings can pivot the propulsion devices to switch between vertical and horizontal flight states. In such a configuration, the stability of the aircraft can be further enhanced if the wing as described above is used as canard wing. Each main wing may comprise more propulsion devices than each canard wing. For example, the canard wing may have six propulsion devices while the main wing comprises nine propulsion devices. The main wing may not be configured as the wing according to the aforementioned aspect. That is, the wing tip end portion may be completely formed by the fixed airfoil in the main wing, that is, no moveable wing tip end portion may be formed.

It is to be noted that it is preferable for the wing, if the movement range in case of a pivotable connection of the moveable lift modifying portion, is at least 90 degrees, more preferably from 105 degrees, even more preferably 120 degrees.

The invention will be described in detail in the following by making reference to the accompanying drawings.
Fig. 1 shows a perspective view of a principal part of an aircraft wing.
Fig. 2 shows a plan view of the wing.
Fig. 3 shows a front view of the wing.
Fig. 4 shows a side view of the wing wherein a moveable lift modifying portion is shown in two states within a movement range.
Fig. 5 shows an aircraft to which a wing according to the invention may be applied.

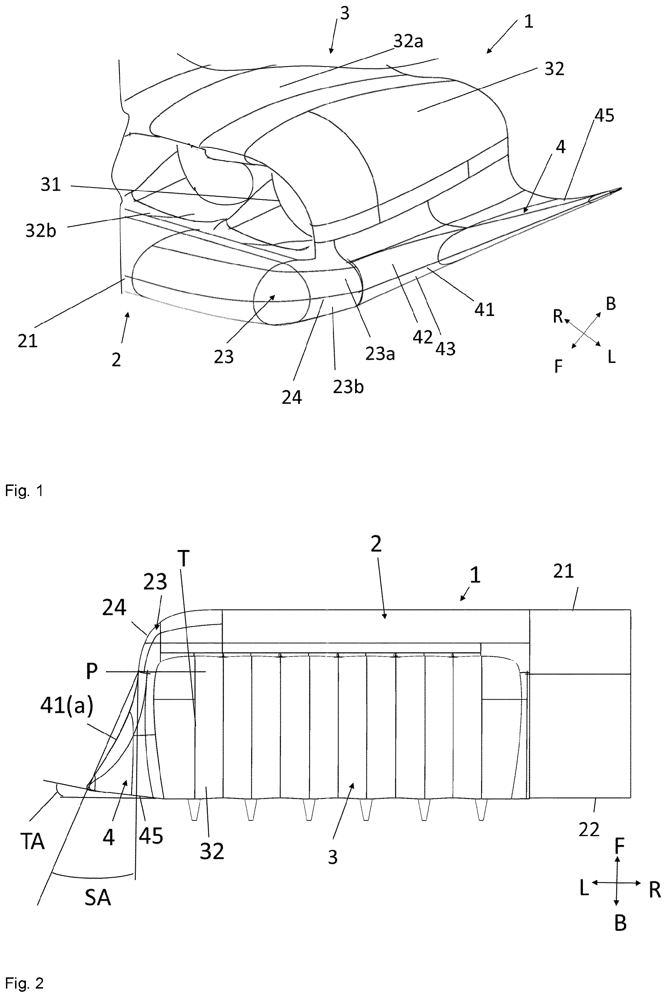

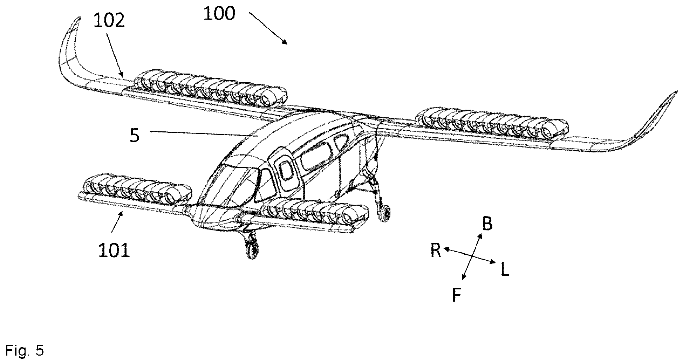

As can be taken from Figs. 1 to 4, there is shown an aircraft wing 1 which can be attached to a fuselage 5 of an aircraft 100 (shown in Fig. 5).

The wing 1 has a fixed lift generating portion 2. The fixed lift generating portion 2 is fixed to the fuselage 5 in an installed state. The fixed lift generating portion 2 is a portion which is capable of generating lift such as an airfoil. To this end, the fixed lift generating portion may at least partially have an aerodynamic profile. In particular, an aerodynamic profile is formed in an inner region close to the fuselage, as can be taken from Fig. 2. The profile has a fixed leading edge 21 and a fixed rear edge 22. It is to be noted that a profile chord of the fixed lift generating portion connecting the fixed leading edge and the fixed rear edge can be mounted with an angle of incidence different from zero with respect to a longitudinal axis of the fuselage 5.

The fixed lift generating portion 2 extends along an extension direction of the wing 1 which is perpendicular to the longitudinal axis of the fuselage 5. The extension direction passes from the side of the fuselage 5 to a tip side being distant from the fuselage. The extension direction is parallel to a transversal axis of the aircraft 1 and is denoted by L-R in the drawings.

Towards the tip side being distant from the fuselage 5, a dimension along the chord of the fixed lift generating portion 2 is reduced. In particular, the profile is cut along the extension direction. The chord defines a front-rear-direction which is perpendicular to the extension direction and is denoted by F-B in the drawings. Even though not exactly represented in the drawings, the front-rear-direction is shown as being orientated horizontally.

In the space resulting from the cut fixed lift generating portion 2, a moveable lift modifying portion 3 is arranged. The moveable lift modifying portion 3 can modify the lift generated by the fixed lift generating portion 2 due to movement within a movement range. In the present case, the moveable lift modifying portion 3 is pivotable about a pivot axis P which is parallel to the extension direction. The moveable lift modifying portion 3 also extends along the extension direction. The moveable lift modifying portion 3 is provided at a rear end portion, preferably a rear end, of the fixed lift generating portion along the front-rear direction.

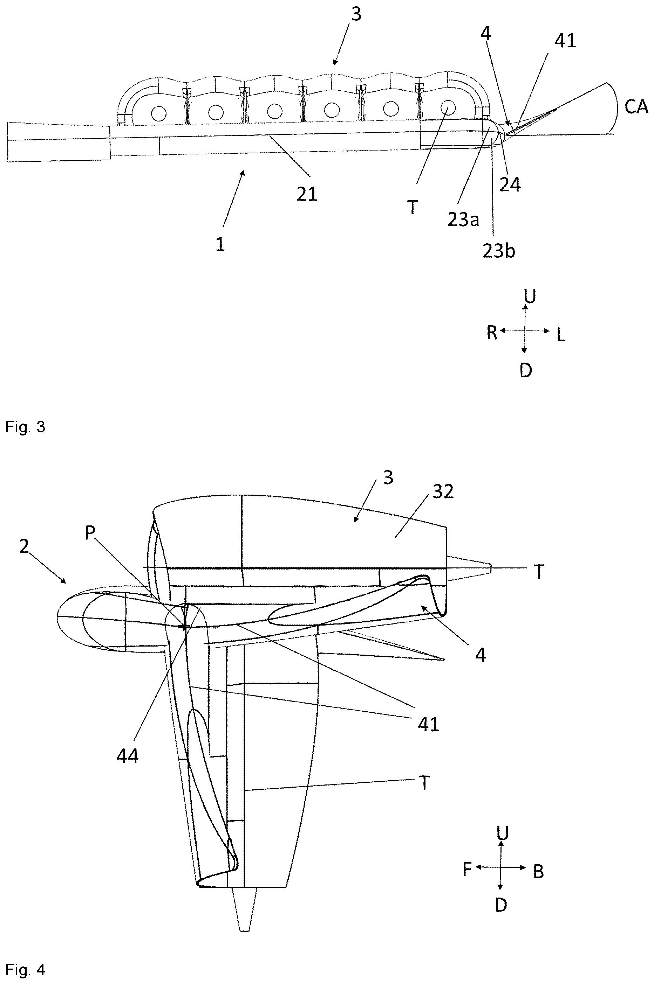

The moveable lift modifying portion 3 comprises a plurality of (six in the present case, as can be taken from Fig. 3) propulsion devices 31. That is, the propulsion device 31 moves together with the moveable lift modifying portion 3. Each of the propulsion devices 31 is of a ducted fan type. That is, the propulsion devices 31 respectively comprise a fan which is rotatable about a rotation axis T which functions also as a thrust axis and defines a thrust direction. The fan is preferably electrically driven. Further, the propulsion devices 31 each comprise a duct 32 which accommodates the fan therein. The duct 32 has two wall parts 32a and 32b which extend substantially along the extension direction on both sides of the axis T in a height direction being perpendicular to the extension and thrust direction. The two wall parts 32a and 32b can be connected together to form a circular duct portion surrounding the fan.

The duct 32, in particular, the two wall parts 32a and 32b are formed as aerodynamic profiles. In particular, respective outer surfaces of the two wall parts 32a and 32b facing away from the axis T can define sectional shape which generates lift.

The propulsion devices 31 may be connected to each other to move integrally with each other as part of one moveable lift modifying portion. However, it is also possible that they can each move individually.

Fig. 4 shows the moveable lift modifying portion 3 in two different states, one in which the thrust axis T is arranged substantially horizontally aligned with the longitudinal axis of the fuselage 5 and the thrust direction pointing forward (horizontally). In this state, the wall part 32b is substantially flush with the fixed lift generating portion 2. The other state is a state in which the thrust axis T is arranged substantially vertically aligned with an up-down-direction of the fuselage 5 which is denoted by U-D in the drawings.

On the tip side of the outermost propulsion device 31 along the extension direction, the moveable lift modifying portion 3 comprises a moveable wing tip end portion 4 which is integrally formed with the duct 32. In particular, the moveable wing tip end portion 4 is formed in a monolithic way with the duct 32 of the outermost propulsion device 31. That is, the outermost propulsion device 31 forms the moveable wing tip end portion 4. The moveable wing tip end portion 4 is an outermost portion on the tip side along the extension direction of the moveable lift modifying portion 3. The moveable wing tip end portion 4 comprises a moveable wing tip edge portion 41, which is an edge located at the tip side of the wing 1 and provided between a leading portion (in particular, a leading edge portion) and a rear portion (in particular, a rear edge portion) of the moveable lift modifying portion 3. It is to be noted that the tip edge portion may be continuous with a leading edge portion such that the leading edge portion transitions smoothly into the tip edge portion. The moveable wing tip end portion 4 is preferably provided along a length from the pivot axis P to a rear end of the outermost duct 32 (wall part 32b) along the thrust axis T. That is, at least in an inner region, an aerodynamic profile of the moveable wing tip end portion 4 provided from a portion comprising the pivot axis P to a rear end of the duct 32 extends along the extension direction However, the aerodynamic profile may also extend upward and not parallel to the extension direction from the duct. The moveable wing tip end portion 4 is substantially continuous with the wall part 32b, that is, extends therefrom to the tip side along the extension direction.

The moveable wing tip end portion 4 and the part of the moveable lift modifying portion 3 with which the moveable wing tip end portion 4 is formed in a monolithic way, in particular, the duct 32 may be formed of the same material. They may be formed of a material comprising or made of synthetic resin, metal, preferably, lightweight metal, or preferably, a composite material such as fiber reinforced plastic. The monolithic structure may be achieved by casting or injection molding.

As can be taken from Fig. 2, the moveable wing tip end portion 4 is substantially flush with a fixed tip end portion 23 having a surface 23a on the suction side and a surface 23b on the pressure side of the fixed lift generating portion 2 along the extension direction of the wing. In particular, the moveable wing tip edge portion 41 is flush with a fixed tip edge portion 24 along the extension direction at a connection location (the location where the pivot axis P is provided) in the front-rear-direction. The moveable wing tip edge portion 41 is continuous with the fixed tip edge portion 24 in the plan view of Fig. 2, but also in the side view of Fig. 4 in any movement state. That is, the pivot axis P is provide such that it is located at an intersection of the moveable wing tip edge portion 41 and the fixed tip edge portion 24.

The moveable wing tip end portion 4 comprises the aerodynamic profile having a surface 42 on the suction side and a surface 43 on a pressure side. The thrust axis T is at least partially arranged on the suction side with respect to surfaces 42 and 43. The surfaces 42 and 43 form a convex portion in a section perpendicular to the thrust axis, the convex portion comprising at least part of the moveable wing tip edge portion, which may be the apex of the convex portion.

It is to be noted that surfaces 23a and 23b also form a convex portion in a section perpendicular to the front-rear-direction. The fixed tip end portion 23 and the moveable wing tip end portion 4 together form an aerodynamic profile, in at least one state throughout the movement range of the moveable lift modifying portion 3. This state can be the state in which the thrust axis T is orientated horizontally.

Further, referring to Fig. 4, there is at least one state along the movement range in which the moveable wing tip edge portion 41 has a tangential transition with the fixed wing tip edge portion in the side view seen along the extension direction. Further, also the surfaces on the suction side 23a and pressure side 23b of the fixed tip end portion 23 and the surfaces on the suction side 42 and pressure side 43 of the moveable wing tip end portion 4 have a tangential transition in the aforementioned flight state and are also substantially flush with each other in the up-down direction in the side view. The surfaces on the suction side 23a and 42 also are provided such that they have a tangential transition over the entire movement range as can be taken from Fig. 4, in the side view.

To this end, the leading portion of the moveable wing tip end portion 4 comprises a peripheral portion 44 which has a predetermined radius from the axis P (in other words, the peripheral portion is arc shaped in the side view). The arc extends preferably over an angle corresponding to the movement range. On the other hand, a tangent to the surface 23a at the rear end thereof, in the side view, is aligned with a tangent to the peripheral portion.

The moveable wing tip edge portion 41 has a concave tip edge portion 41a which has a concave shape in the plan view, as can be taken from Fig. 2. The concave tip edge portion 41a may form the entire moveable tip edge portion 41 or can only be a part thereof, but preferably starts from the pivot axis P. Further, as can be taken from Fig. 2, the moveable wing tip edge portion 41 extends further towards the tip side as it extends rearward. That is, it is preferred if the wing tip end portion 4 has a tapered shape in the plan view. It is to be noted that the opposite direction with respect to the thrust direction defines a local front-rear-direction for the moveable lift modifying portion 3. The moveable wing tip edge portion 41 extends further to the tip side than the fixed tip edge portion.

Also, the moveable wing tip end portion 4, in particular, the moveable wing tip edge portion 41, but also the surfaces 42 and 43, extends to the suction side as it extends towards the tip side. It/They further extend(s) towards the suction side as it extends towards the rear side. That is, a rear end of the moveable wing tip edge portion 41 is located higher (further to the suction side) than a front end. The moveable wing tip end portion 4, in particular, a rear end of the wing tip edge portion 41, extends higher than the upper surface 23a of the fixed tip end portion 23 in the at least one movement state.

The moveable wing tip end portion 41 also comprises a rear edge portion 45, which is located at the rear along the local front-rear-direction of the moveable wing tip end portion 4. A tip end of the rear edge portion 45 is located higher than an inner end (an end on a side of the outermost duct 32, preferably connected thereto). Furthermore, the rear edge portion 45 is inclined towards the front as it extends towards the tip side as it can be seen from the plan view in Fig. 2.

Operation and effects of the invention will be described in the following.

The wing 1 can be attached to the aircraft 100 as shown in Fig. 5. In Fig. 5, the aircraft 100 has not the wing having the wing tip end portion as specified above and the wing and aircraft as shown therefore do not fall within the scope of the claims. The aircraft 100 has two canard wings 101 and two main wings 102. The two canard wings 101 are located on both sides of a longitudinal axis of the fuselage 5 in a symmetrical manner. The canard wings 101 are arranged forward of a center of gravity of the aircraft 100. Rearward of the center of gravity, the two main wings 102 are attached in a symmetrical manner with respect to the longitudinal axis. Both of the canard wings 101 and the main wings 102 extend parallel to a transversal axis of the aircraft 100 wherein the main wing 102 extends further outward than the canard wing 101. Both of the canard wings 101 and the main wings 102 have a fixed lift generating portion and a moveable lift modifying portion. The canard wings 101 comprise six propulsion devices, respectively, the main wings 102 comprise nine propulsion devices, each. The propulsion devices may be provided in one or a plurality of moveable lift modifying portions which may be configured as flaps, as shown in Fig. 5.

It is to be noted that, in Fig. 5, the fixed lift generating portion (airfoil) of the main wing 102 forms a wing tip end portion in form of a winglet.

The wing 1 described above may be applied as the canard wing 101.

Then, the moveable lift modifying portion 3 can be pivoted such that the thrust direction is pointing upward. Thus, upon driving the fans of the propulsion devices 31, the aircraft can take-off from the ground. Similarly, the propulsion devices on the main wing 102 can be pivoted. Considering the movement state of tangential transition between the moveable tip edge portion 41 and the fixed tip edge portion 24 as an orientation of 0 degrees (in this state the thrust direction can be orientated forwardly), the movement range reaches from at least 0 degrees to 90 degrees (the thrust direction pointing upward), preferably from -5 degrees to 100 degrees, more preferably from -10 degrees to 110 degrees.

After having gained sufficient distance from ground, the moveable lift modifying portion 3 can be pivoted such that the thrust direction points forward, and the aircraft can initiate forward flight. Similarly, the propulsion devices on the main wing can be pivoted.

According to the invention, the moveable lift modifying portion 3, in particular, the outermost propulsion device 31 forms the moveable wing tip end portion 4. Thus, there is no gap in the extension direction on a tip side of the moveable lift modifying portion 3. According thereto, lift generation is not affected by such gap. In particular, over the plurality of flight states encompassing take-off, hover, forward, cruise, and landing as well as intermediate states, edge circulation at a tip edge of the moveable lift modifying portion 3 is not affected by such gap. Further, the wing tip end portion has an aerodynamic profile which can advantageously affect vortex generation and contribute to reduce the induced drag

In Fig. 2, the angle of inclination of the moveable wing tip edge portion 41, in particular, of the concave tip edge portion 41a in the plan view of the moveable wing end portion 4 with respect to the thrust direction is denoted as SA (sweep angle). The angle of the rear edge portion 45 is shown as TA (trailing angle). It is to be noted that the moveable tip edge portion 41 and/or the rear edge portion 45 can be, but need not be straight lines. In the latter case, as shown for SA, the angle is a mean angle, from a starting point to an end point along the inclination/curvature. Preferably, the moveable wing tip edge portion 45 is inclined from the pivot axis P to the rear edge portion over the entire length along the front-rear-direction, but need not necessarily have a uniform inclination over the entire length. Similar applies to the rear edge portion 45, which may be inclined over the entire length from the duct 32 to the tip edge portion 41.

SA is preferably larger than zero degrees and smaller than or equal to 45 degrees, preferably equal to or more than 10 degrees and smaller than or equal to 30 degrees.

It is to be noted that the fixed tip edge portion 24 can be inclined at the same angle. Preferably, in the plan view, in the at least one movement state, the inclination angle is the same as SA at the connection location. The fixed tip edge portion 24 can be convex shaped in the plan view. TA is preferably higher more than zero degrees and smaller than or equal to 20 degrees, preferably equal to or more than 3 degrees and smaller than or equal to 15 degrees. Furthermore, as can be taken from Fig. 3, in the front view, there is shown an angle CA (cant angle) which is defined as angle between the extension direction and the moveable tip edge portion 41. CA is preferably larger than zero degrees and smaller than or equal to 45 degrees, preferably equal to or more than 10 degrees and smaller than or equal to 30 degrees.

With this geometric relationships, whereby any of the aforementioned intervals for SA, TA, and CA, can be combined with each other, the induced drag can be massively reduced, while ensuring stable lift generation and the wing tip end portion 4 can thus be configured as winglet.

Further, in the above, the moveable wing tip edge portion 41 is at least partially inclined with respect to the thrust direction. This must not necessarily apply in the plan view. The wing tip end portion 4 may also be formed in a disc shape being perpendicular to the extension direction and an edge of the disc may be inclined with respect to the thrust direction in a side view.

Thus, compared with a case in which the moveable wing tip edge portion 41 is parallel to the thrust direction, or in other words, perpendicular to the extension direction, the planform area of the moveable wing tip end portion 4 can be reduced, and the lift distribution can be advantageously modified while reducing the induced drag due to edge circulation.

In particular, the moveable wing tip edge portion 41 is at least partially inclined toward the tip side as it extends rearward, even more preferably starting from a leading edge portion or the pivot axis P of the moveable wing tip end portion 4.

According thereto, the loading on the moveable wing tip end portion 4 can be advantageously affected and the lift generation may be enhanced.

Further, the moveable lift modifying portion 3, in particular, the at least one propulsion device 31 forming the moveable wing tip end portion 4 is located at least in sections rearward of the fixed lift generating portion 2 and the moveable lift modifying portion 3 is configured as a flap.

Thus, the moveable lift modifying portion 3 can massively influence the lift generation wherefore the aforementioned effects may take place more reliably.

The at least one propulsion device 31 is at least partially, in particular a thrust axis T, provided on a suction side of the fixed lift generating portion 2 in the at least one movement state and of the moveable wing tip end portion 4.

According thereto, the at least one propulsion device 31 may suck the air on the suction side of the fixed lift generating portion 2 and the moveable wing tip end portion 4, which may enhance flow stability and prevent flow separation. This in turn can increase aerodynamic performance of the moveable lift modifying portion 3 and the moveable wing tip end portion 4 thereof.

The moveable wing tip edge portion 41 comprises a concave tip edge portion 41a which has a concave shape.

Thereby, the pressure distribution on the moveable wing tip end portion 4 can be advantageously affected. In particular, drag can be reduced throughout the entire movement range of the moveable lift modifying portion.

The moveable wing tip end portion 4 extends at least partially towards a suction side of the moveable wing tip end portion 4 as it extends toward the tip side.

Thereby, the moveable wing tip end portion 4 may function as a winglet. That is, the resulting pressure distribution can be set such that the induced drag due to edge circulation can be further reduced.

The fixed lift generating portion 2 and the moveable lift modifying portion 3 are pivotally connected to each other, and the moveable wing tip edge portion 41 and the fixed tip edge portion 24 are continuous with each other in the plan view of the fixed lift generating portion.

Thus, the moveable wing tip edge portion 41 and the fixed tip edge portion 24 can be provided such that they are substantially flush along the extension direction. In other words, the moveable wing tip edge portion 41 and the fixed tip edge portion 24 can be provided such that they are not shifted along the extension direction. Thereby, the aerodynamic performance is further enhanced.

Portions of the surfaces 23a and 42 (surfaces on the suction side) which are portions at ends of the fixed tip end portion 23 and the moveable wing tip end portion 4 at the connection location (pivot axis), have a smooth, preferably tangential, transition, when seen along the extension direction, over the entire movement range. Also, the moveable wing tip edge portion 41 and the fixed tip edge portion 24 have a tangential transition in at least one movement state.

Thereby, junction losses can be reduced. A smooth transition means a transition without steps or sharp edges. If such a transition is provided over the entire movement range, the aerodynamic performance can be enhanced over a plurality of flight states.

In particular, the moveable wing tip end portion 4 has a peripheral portion 44 having a predetermined radius from the pivot axis P in the side view, and the fixed lift generating portion 2 is provided such that the fixed lift generating portion 2 and the peripheral portion have an aligned tangent at a virtual intersection thereof. The peripheral portion 44 may overlap the fixed lift generating portion 2 in the side view in the up-down-direction.

Thereby, a tangential transition can be ensured over a wide movement range.

The moveable wing tip edge portion 41 has a length in the thrust direction greater than a length of a fixed tip edge portion 24 along a front-rear-direction thereof.

Thus, a considerable amount of lift can be provided via the moveable lift modifying portion and the aforementioned effects are particularly advantageous.

The wing 1 described above can be configured as canard wing. Thereby, stability of the aircraft can be enhanced.

For example, the wing can be provided in front of a center of gravity of the aircraft, in a loaded and unloaded state of the aircraft. A wing of the above kind may be provided on each side, preferably symmetrically, of a longitudinal axis of the aircraft. Furthermore, the aircraft can have two main airfoils to both sides of the longitudinal axis rearward of a center of gravity.

In a modification of the above wing 1, the moveable wing tip edge portion 41 needs not be curved in the plan view but can be straight or formed of several straight line elements which have different inclination angles. In the latter case, a mean angle may be determined.

Also, the rear edge portion 45 need not be inclined with respect to the extension direction.

It is also possible, that the moveable lift modifying portion 3 is pivotable about a different axis, such as an axis parallel to the front-rear direction, or moveable in a translational manner.

Further, the moveable lift modifying portion can be provided in front of the fixed lift generating portion.

In the present disclosure, the term "at least" comprises the respective entirety and only the specified item, unless otherwise specified.

## Claims

1. A wing (1), preferably a canard wing, comprising:
a fixed lift generating portion (2) extending along an extension direction of the wing (1);
a moveable lift modifying portion (3) which is moveably, preferably pivotably, more preferably about a pivot axis (P) along the extension direction of the wing (1), connected to the fixed lift generating portion (2),
wherein the moveable lift modifying portion (3) comprises at least one propulsion device (31) configured to generate a thrust force along a thrust direction for powering the aerial vehicle, preferably a plurality of propulsion devices (31) arranged along the extension direction, the at least one propulsion device (31) being of the ducted fan type comprising a duct (32) that
accommodates a fan therein,
**characterized in that**
the outermost propulsion device (31) forms a moveable wing tip end portion (4) located at a tip side along the extension direction of the wing (1), the moveable wing tip end portion (4) comprising an aerodynamic profile, which is part of a winglet,
the moveable wing tip end portion (4) is integrally formed with the duct (32) of the outermost propulsion device (31), wherein
the outermost propulsion device (31) extends to the tip end of the wing (1) thereby forming the moveable wing tip end portion (4) which comprises the aerodynamic profile being part of the winglet, wherein the moveable wing tip end portion (4) extends from the duct (32) of the outermost propulsion unit (31) to the tip side along the extension direction.

2. The wing (1) according to claim 1 wherein a moveable wing tip edge portion (41) of the moveable wing tip end portion (4) is at least partially inclined with respect to the thrust direction, wherein the moveable wing tip edge portion (41) is at least partially inclined toward the tip side as it extends rearward, preferably starting from a leading edge portion of the moveable wing tip end portion (4).

3. The wing (1) according to claim 2, wherein the moveable wing tip edge portion (41) is inclined at an angle equal to or more than 10 degrees and smaller than or equal to 30 degrees with respect to the thrust direction in a plan view of the moveable lift modifying portion (3).

4. The wing (1) according to at least one of the preceding claims, wherein the moveable lift modifying portion (3) is located at least in sections rearward of the fixed lift generating portion (2), preferably the moveable lift modifying portion (3) is configured as a flap.

5. The wing (1) according to at least one of the preceding claims, wherein the at least one propulsion device (31) is preferably at least partially, in particular a thrust axis (T), provided on a suction side of the fixed lift generating portion (2) in at least one movement state of a moveable range of the moveable lift modifying portion and/or of the moveable wing tip end portion (4).

6. The wing (1) according to at least one of the preceding claims, wherein a moveable wing tip edge portion (41) of the moveable wing tip end portion (4) comprises a concave tip edge portion (41a) which has a concave shape in the plan view.

7. The wing (1) according to at least one of the preceding claims, wherein the moveable wing tip end portion (4) at least partially extends towards a suction side of the moveable wing tip end portion (4) as it extends toward the tip side.

8. The wing (1) according to at least one of the preceding claims, wherein the fixed lift generating portion (2) and the moveable lift modifying portion (3) are pivotally connected to each other,
wherein a moveable wing tip edge portion (41) of the moveable wing tip end portion (4) and a fixed tip edge portion (24) of the fixed lift generating portion (2) are continuous with each other in the plan view of the fixed lift generating portion (2), and, preferably,
the moveable wing tip end portion (4) and the fixed lift generating portion (2) at least partially, preferably at least surface portions on the suction side thereof and/or the moveable wing tip edge portion (41) and the fixed tip edge portion (24), have a smooth, preferably tangential, transition, when seen along the extension direction, in at least one movement state of a moveable range of the moveable lift modifying portion (3), preferably over the entire moveable range,
in particular, the moveable wing tip end portion (4) has a peripheral portion (44) having a predetermined radius from the pivot axis (P), and the fixed lift generating portion (2) is provided such that the fixed lift generating portion (2) and the peripheral portion (44) have an aligned tangent at a virtual intersection thereof.

9. The wing (1) according to at least one of the preceding claims, wherein the moveable wing tip end portion (4) has a rear edge portion (45) provided at the rear, being connected to a moveable wing tip edge portion (41) of the moveable wing tip end portion (4), and being at least partially inclined with respect to the extension direction, preferably towards the front as it extends towards the tip side.

10. The wing (1) according to at least one of the preceding claims, wherein the fixed lift generating portion (2) comprises a fixed tip edge portion (24) which is preferably at least partially inclined with respect to a front-rear-direction in a plan view of the fixed lift generating portion (2).

11. The wing (1) according to at least one of the preceding claims, wherein a moveable wing tip edge portion (41) of the moveable wing tip end portion (4) has a length in the thrust direction greater than a length of a fixed tip edge portion (24) of the fixed lift generating portion (23) along a front-rear-direction thereof.

12. The wing (1) according to at least one of the preceding claims, wherein the moveable wing tip end portion (4), in particular, the aerodynamic profile thereof, is formed with the duct (32) of the propulsion device (31), in a monolithic way.

13. An aircraft comprising the wing (1) according to at least one of the preceding claims.

14. The aircraft according to claim 13, wherein the aircraft is of a vertical-take-off-and-landing type, wherein preferably,
two of the wings (1) are configured as canard wing, respectively, which are located symmetrically with respect to a longitudinal axis of the aircraft and forward of a center of gravity of the aircraft, and
the aircraft further comprises two main wings which are located symmetrically with respect to a longitudinal axis of the aircraft and rearward of a center of gravity of the aircraft, and the two main wings comprising a fixed airfoil and at least one propulsion device, preferably a plurality thereof, pivotably provided with respect to the fixed air foil, even more preferably about an axis parallel to an extension direction of the main wing.

## Patentansprüche

1. Flügel (1), vorzugsweise Canardflügel, aufweisend:
einen festen Auftrieb erzeugenden Abschnitt (2), der sich entlang einer Erstreckungsrichtung des Flügels (1) erstreckt;
einen beweglichen Auftriebsmodifizierungsabschnitt (3), der beweglich, vorzugsweise schwenkbar, insbesondere um eine Schwenkachse (P) entlang der Erstreckungsrichtung des Flügels (1), mit dem festen Auftrieb erzeugenden Abschnitt (2) verbunden ist,
wobei der bewegliche Auftriebsmodifizierungsabschnitt (3) mindestens eine Vortriebsvorrichtung (31) umfasst, die so konfiguriert ist, dass sie eine Schubkraft entlang einer Schubrichtung zum Antrieb des Luftfahrzeugs erzeugt, vorzugsweise eine Vielzahl von Vortriebsvorrichtungen (31), die entlang der Ausdehnungsrichtung angeordnet sind,
wobei die mindestens eine Vortriebsvorrichtung (31) vom Typ eines Mantelstromgebläses ist und einen Kanal (32) umfasst, der ein Gebläse darin aufnimmt,
**dadurch gekennzeichnet, dass**
die äußerste Vortriebseinrichtung (31) einen beweglichen Flügelspitzenendabschnitt (4) bildet, der an einer Spitzen-Seite entlang der Ausdehnungsrichtung des Flügels (1) angeordnet ist, wobei der bewegliche Flügelspitzenendabschnitt (4) ein aerodynamisches Profil umfasst, das Teil eines Winglets ist,
der bewegliche Flügelspitzenendabschnitt (4) integral mit dem Kanal (32) der äußersten Vortriebseinrichtung (31) ausgebildet ist, wobei
die äußerste Vortriebseinrichtung (31) sich bis zum Spitzenende des Flügels (1) erstreckt und dabei den beweglichen Flügelspitzenendabschnitt (4) bildet, der das aerodynamische Profil umfasst, das Teil des Winglets ist, wobei sich der bewegliche Flügelspitzenendabschnitt (4) von dem Kanal (32) der äußersten Vortriebseinheit (31) entlang der Ausdehnungsrichtung zur Spitzenseite erstreckt.

2. Flügel (1) nach Anspruch 1, wobei ein beweglicher Flügelspitzen-Kantenabschnitt (41) des beweglichen Flügelspitzenendabschnitts (4) zumindest teilweise in Bezug auf die Schubrichtung geneigt ist, wobei der bewegliche Flügelspitzen-Kantenabschnitt (41) zumindest teilweise in Richtung der Flügelspitzenseite geneigt ist, während er sich nach hinten erstreckt, vorzugsweise ausgehend von einem Vorderkantenabschnitt des beweglichen Flügelspitzen-Endabschnitts (4).

3. Flügel (1) nach Anspruch 2, wobei der bewegliche Flügelspitzen-Kantenabschnitt (41) in einer Draufsicht auf den beweglichen Auftriebsmodifizierungsabschnitt (3) in einem Winkel geneigt ist, der gleich oder größer als 10 Grad und kleiner oder gleich 30 Grad in Bezug auf die Schubrichtung ist.

4. Flügel (1) nach mindestens einem der vorhergehenden Ansprüche, wobei der bewegliche Auftriebsmodifizierungsabschnitt (3) zumindest abschnittsweise hinter dem festen Auftrieb erzeugenden Abschnitt (2) angeordnet ist, wobei der bewegliche Auftriebsmodifizierungsabschnitt (3) vorzugsweise als Klappe ausgebildet ist.

5. Flügel (1) nach mindestens einem der vorhergehenden Ansprüche, wobei die mindestens eine Vortriebseinrichtung (31), vorzugsweise zumindest teilweise, insbesondere einer Schubachse (T), an einer Sogseite des festen Auftrieb erzeugenden Abschnitts (2) in mindestens einem Bewegungszustand eines Verstellbereichs des beweglichen Auftriebsmodifizierungsabschnitts und/oder des beweglichen Flügelspitzen-Endabschnitts (4) vorgesehen ist.

6. Flügel (1) gemäß mindestens einem der vorhergehenden Ansprüche, wobei ein beweglicher Flügelspitzen-Kantenabschnitt (41) des beweglichen Flügelspitzen-Endabschnitts (4) einen konkaven Spitzen-Kantenabschnitt (41a) umfasst, der in der Draufsicht eine konkave Form aufweist.

7. Flügel (1) gemäß mindestens einem der vorhergehenden Ansprüche, wobei sich der bewegliche Flügelspitzenendabschnitt (4) zumindest teilweise in Richtung einer Saugseite des beweglichen Flügelspitzenendabschnitts (4) erstreckt, wenn er sich in Richtung der Spitzenseite erstreckt.

8. Flügel (1) gemäß mindestens einem der vorhergehenden Ansprüche, wobei der feste Auftriebserzeugungsabschnitt (2) und der bewegliche Auftriebsmodifizierungsabschnitt (3) schwenkbar miteinander verbunden sind,
wobei ein beweglicher Flügelspitzen-Kantenabschnitt (41) des beweglichen Flügelspitzenendabschnitts (4) und ein fester Spitzenrandabschnitt (24) des feststehenden Auftrieb erzeugenden Abschnitts (2) in der Draufsicht des festen Auftrieb erzeugenden Abschnitts (2) ineinander übergehen und vorzugsweise
der bewegliche Flügelspitzenendabschnitt (4) und der feste Auftriebserzeugungsabschnitt (2) zumindest teilweise, vorzugsweise zumindest Oberflächenabschnitte auf der Saugseite davon und/oder der bewegliche Flügelspitzen-Kantenabschnitt (41) und der feste Spitzen-Kantenabschnitt (24) in mindestens einem Bewegungszustand eines Bewegungsbereichs des beweglichen Auftriebsmodifizierungsabschnitts (3), vorzugsweise über den gesamten Bewegungsbereich, einen glatten, vorzugsweise tangentialen, Übergang aufweisen,
insbesondere der bewegliche Flügelspitzenendabschnitt (4) einen Umfangsabschnitt (44) mit einem vorbestimmten Radius von der Schwenkachse (P) aufweist und der feste Auftrieb erzeugende Abschnitt (2) so vorgesehen ist, dass der feste Auftrieb erzeugende Abschnitt (2) und der Umfangsabschnitt (44) eine ausgerichtete Tangente an einem virtuellen Schnittpunkt davon aufweisen.

9. Flügel (1) gemäß mindestens einem der vorhergehenden Ansprüche, wobei der bewegliche Flügelspitzenendabschnitt (4) einen hinteren Kantenabschnitt (45) aufweist, der an der Rückseite vorgesehen ist, mit einem beweglichen Flügelspitzen-Kantenabschnitt (41) des beweglichen Flügelspitzenendabschnitts (4) verbunden ist und zumindest teilweise in Bezug auf die Verlängerungsrichtung geneigt ist, vorzugsweise nach vorne, wenn er sich zur Spitzenseite hin erstreckt.

10. Flügel (1) gemäß mindestens einem der vorhergehenden Ansprüche, wobei der feste Auftrieb erzeugende Abschnitt (2) einen feststehenden Spitzenrandabschnitt (24) umfasst, der in einer Draufsicht auf den feste Auftrieb erzeugenden Abschnitt (2) vorzugsweise zumindest teilweise in Bezug auf eine Richtung von vorne nach hinten geneigt ist.

11. Flügel (1) gemäß mindestens einem der vorhergehenden Ansprüche, wobei ein beweglicher Flügelspitzen-Kantenabschnitt (41) des beweglichen Flügelspitzenendabschnitts (4) eine Länge in der Schubrichtung aufweist, die größer ist als eine Länge eines festen Spitzen-Kantenabschnitts (24) des festen Auftriebserzeugungsabschnitts (23) entlang einer Richtung von vorne nach hinten davon.

12. Flügel (1) gemäß mindestens einem der vorhergehenden Ansprüche, wobei der bewegliche Flügelspitzenendabschnitt (4), insbesondere dessen aerodynamisches Profil, mit dem Kanal (32) der Vortriebseinrichtung (31) auf monolithische Weise ausgebildet ist.

13. Flugzeug, das den Flügel (1) gemäß mindestens einem der vorhergehenden Ansprüche aufweist.

14. Flugzeug gemäß Anspruch 13, wobei das Flugzeug ein Senkrechtstarter ist, wobei vorzugsweise zwei der Flügel (1) jeweils als Canardflügel konfiguriert sind, die symmetrisch in Bezug auf eine Längsachse des Flugzeugs und vor einem Schwerpunkt des Flugzeugs angeordnet sind, und
das Flugzeug ferner zwei Hauptflügel umfasst, die symmetrisch in Bezug auf eine Längsachse des Flugzeugs und hinter einem Schwerpunkt des Flugzeugs angeordnet sind, und die zwei Hauptflügel ein festes Tragflächenprofil und mindestens eine Vortriebseinrichtung, vorzugsweise eine Mehrzahl davon, umfassen, die schwenkbar in Bezug auf das feste Tragflächenprofil vorgesehen ist, noch bevorzugter um eine Achse parallel zu einer Erstreckungsrichtung des Hauptflügels.

## Revendications

1. Aile (1), de préférence une aile canard, comprenant :
une partie fixe de génération de portance (2) s'étendant le long d'une direction d'extension de l'aile (1) ;
une partie mobile de modification de portance (3) qui est mobile, de préférence pivotante, de préférence autour d'un axe de pivotement (P) le long de la direction d'extension de l'aile (1), reliée à la partie fixe de génération de portance (2),
dans lequel la partie mobile de modification de portance (3) comprend au moins un dispositif de propulsion (31) configuré pour générer une force de poussée le long d'une direction de poussée pour propulser l'aéronef, de préférence une pluralité de dispositifs de propulsion (31) disposés le long de la direction d'extension,
ledit au moins un dispositif de propulsion (31) étant du type ventilateur canalisé comprenant un conduit (32) logeant un ventilateur,
**caractérisé par le fait que** le dispositif de propulsion le plus extérieur (31) forme un bout d'aile mobile (4) située à un côté du bout d'aile le long de la direction d'extension de l'aile (1), le bout d'aile mobile (4) comprenant un profil aérodynamique, qui fait partie d'une ailette,
la partie mobile du bout d'aile (4) est intégralement formée avec le conduit (32) du dispositif de propulsion le plus extérieur (31), dans lequel
le dispositif de propulsion extérieur (31) s'étend jusqu'au bout d'aile (1), formant ainsi la partie mobile du bout d'aile (4) qui comprend le profil aérodynamique faisant partie de l'ailette, dans laquelle la partie mobile du bout d'aile (4) s'étend du conduit (32) du dispositif de propulsion extérieur (31) jusqu'au côté de l'aile le long de la direction d'extension.

2. Aile (1) selon la revendication 1, dans laquelle une partie mobile du bout d'aile (41) de la partie mobile du bout d'aile (4) est au moins partiellement inclinée par rapport à la direction de poussée, dans laquelle la partie mobile du bout d'aile (41) est au moins partiellement inclinée vers le côté du bout d'aile lorsqu'elle s'étend vers l'arrière, de préférence à partir d'une partie du bord d'attaque de la partie mobile du bout d'aile (4).

3. Aile (1) selon la revendication 2, dans laquelle la partie mobile du bout d'aile (41) est inclinée à un angle égal ou supérieur à 10 degrés et inférieur ou égal à 30 degrés par rapport à la direction de poussée dans une vue en plan de la partie mobile de modification de portance (3).

4. Aile (1) selon au moins l'une des revendications précédentes, dans laquelle la partie mobile de modification de portance (3) est située au moins en partie à l'arrière de la partie fixe de génération de portance (2), de préférence la partie mobile de modification de portance (3) est configurée comme un volet.

5. Aile (1) selon au moins l'une des revendications précédentes, dans laquelle ledit au moins un dispositif de propulsion (31) est de préférence au moins partiellement, en particulier un axe de poussée (T), prévu sur un côté d'aspiration de la partie fixe de génération de portance (2) dans au moins un mode de mouvement d'une plage mobile de la partie mobile modificatrice de portance et/ou de la partie mobile du bout d'aile (4).

6. Aile (1) selon au moins l'une des revendications précédentes, dans laquelle une partie mobile du bout d'aile (41) de la partie mobile du bout d'aile (4) comprend une partie de bout d'aile concave (41a) dont la forme est concave vue en plan.

7. Aile (1) selon au moins l'une des revendications précédentes, dans laquelle la partie mobile du bout d'aile (4) s'étend au moins partiellement vers un côté d'aspiration de la partie mobile du bout d'aile (4) lorsqu'elle s'étend vers le côté du bout d'aile.

8. Aile (1) selon au moins l'une des revendications précédentes, dans laquelle la partie fixe de génération de portance (2) et la partie mobile modificatrice de portance (3) sont reliées de manière pivotante l'une à l'autre,
dans laquelle une partie mobile du bout d'aile (41) de la partie mobile du bout d'aile (4) et une partie fixe du bout d'aile (24) de la partie fixe de génération de portance (2) sont dans l'alignement l'une avec l'autre vue en plan de la partie fixe de génération de portance (2), et, de préférence, dans laquelle une partie fixe du bout d'aile (24) de la partie fixe de génération de portance (2) est continue,
la partie mobile du bout d'aile (4) et la partie fixe de génération de portance (2) au moins partiellement, de préférence au moins les parties superficielles de leur côté aspiration et/ou la partie mobile du bout d'aile (41) et la partie fixe du bout d'aile (24), présentent une transition en douceur, de préférence tangentielle, vues le long de la direction d'extension, dans au moins un mode de mouvement d'une plage mobile de la partie mobile de modification de portance (3), de préférence sur l'ensemble de la plage mobile,
en particulier, la partie mobile du bout d'aile (4) possède une partie périphérique (44) avec un rayon prédéterminé à partir de l'axe de pivotement (P), et la partie fixe de génération de portance (2) est prévue de telle sorte que la tangente de partie fixe de génération de portance (2) et de la partie périphérique (44) soit tangente alignée par rapport à une intersection virtuelle de celles-ci.

9. Aile (1) selon au moins l'une des revendications précédentes, dans laquelle la partie mobile du bout d'aile (4) possède une partie de bout arrière (45) prévue à l'arrière, reliée à une partie mobile du bout d'aile (41) de la partie mobile du bout d'aile (4), et au moins partiellement inclinée par rapport à la direction d'extension, de préférence vers l'avant lorsqu'elle s'étend vers le côté du bout d'aile.

10. Aile (1) selon au moins l'une des revendications précédentes, dans laquelle la partie fixe de génération de portance (2) comprend une partie fixe de bord d'attaque (24) qui est de préférence au moins partiellement inclinée par rapport à une direction avant-arrière dans une vue en plan de la partie fixe de génération de portance (2).

11. Aile (1) selon au moins l'une des revendications précédentes, dans laquelle une partie mobile du bout d'aile (41) de la partie mobile de bout d'aile (4) est, dans la direction de poussée, d'une longueur supérieure à la longueur d'une partie de bout d'aile fixe (24) de la partie fixe de génération de portance (23) le long d'une direction avant-arrière de celle-ci.

12. Aile (1) selon au moins l'une des revendications précédentes, dans laquelle la partie mobile du bout d'aile (4), en particulier son profil aérodynamique, est formée avec le conduit (32) du dispositif de propulsion (31), de manière monolithique.

13. Aéronef comprenant l'aile (1) selon au moins l'une des revendications précédentes.

14. Aéronef selon la revendication 13, dans lequel l'aéronef est du type à décollage et atterrissage verticaux,
deux des ailes (1) sont configurées comme ailes canard, respectivement, qui sont situées symétriquement par rapport à un axe longitudinal de l'aéronef et à l'avant d'un centre de gravité de l'aéronef, et
l'aéronef comprend en outre deux ailes principales situées symétriquement par rapport à un axe longitudinal de l'aéronef et à l'arrière du centre de gravité de l'aéronef, et les deux ailes principales comprennent un profil aérodynamique fixe et au moins un dispositif de propulsion, de préférence plusieurs, pivotant par rapport au profil aérodynamique fixe, de préférence encore autour d'un axe parallèle à une direction d'extension de l'aile principale.
